(19) Europäisches Patentamt
European Patent Office
Office européen des brevets

(11) **EP 4 012 654 A2**

(12) **EUROPEAN PATENT APPLICATION**

(43) Date of publication:
**15.06.2022 Bulletin 2022/24**

(21) Application number: **21204541.3**

(22) Date of filing: **25.10.2021**

(51) International Patent Classification (IPC):
***G06T 7/62*** *(2017.01)*

(52) Cooperative Patent Classification (CPC):
**G06T 7/62;** G06T 2207/20101; G06T 2207/20104

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.10.2020 US 202063105349 P**
**15.06.2021 US 202163210526 P**

(71) Applicant: **Tomar, Nishant**
**Crystal Lake, IL 60014 (US)**

(72) Inventor: **Tomar, Nishant**
**Crystal Lake, IL 60014 (US)**

(74) Representative: **Grünecker Patent- und Rechtsanwälte**
**PartG mbB**
**Leopoldstraße 4**
**80802 München (DE)**

(54) **FEATURE DETERMINATION, MEASUREMENT, AND VIRTUALIZATION FROM 2-D IMAGE CAPTURE**

(57) A user images a portion of a scene (100), for example, using the camera of a mobile device (200) and selects at least two points of interest whose spatial coordinates are generated by a coordinate-generating component (2310). The image and the coordinates are transferred to an analysis module (6310, 6320) installed either in the user's device (200) or a recipient's device (600), which determines at least one dimensional characteristic such as length, area, and/or volume of at least one feature represented in the transferred image.

**FIG. 1**

## Description

### TECHNICAL FIELD

This invention relates to camera-based optical measurement.

### BACKGROUND

It is often advantageous to be able to determine at least some aspects of the geometry of an object or space remotely, that is, when not able to make direct, physical measurements. As just one of countless potential examples, an insurance adjuster may wish to be able to estimate the extent, in terms of area, of a damaged portion of a wall, without having to travel to the site where the damage has occurred.

Measurement systems exist that provide estimates of at least linear distance based on images taken by cameras or mobile phones, but these typically require some reference object to be in the image frame as well. For example, if a ruler or any other object with at least one known linear dimension lies parallel to an edge of a table in an image, then one may estimate the length of the edge by comparing its length within the image against the ruler or reference object also in the image. In many cases, no suitable reference object is conveniently available, or requires too much user skill or effort.

Augmented Reality (AR) is a growing technology in which computer-generated features are added into a presentation of the physical world. To support AR applications, major mobile phone manufacturers often include software that scans an image being captured by the phone's camera, and generates metadata about the image that includes markers such as "dots" or points that correspond to geometric features such as corners, boundaries, edges, etc. For example, phones that run the iOS operating system often include software such as ARKit, and those that use the Android operating system often include AR Core, for this purpose. In general, current phone-based AR applications attempt to establish planar surfaces such as walls, floors, tables, and the like, and may then superimpose a grid on the image.

Modern mobile phones use different techniques to determine the values necessary to enable three-dimensional modelling, that is, not only the relative position of points to each other in a pixel plane, but also with respect to depth. One way some phones determine depth is by an application of some variation of the Law of Sines from two angles to the same object as determined by an onboard MEMS (micro electro mechanical system) gyroscope along with an estimation of the distance between the phone at the two imaging times using an on-board MEMS accelerometer. Another method some phones use to determine depth is by computing a time-of-flight of a signal such as an infrared pulse. Other optical methods may also be used.

Products made by Apple, Inc., use a technique it refers to as "visual-inertial odometry" along with image analysis to track the "pose" of a mobile device, that is, its six-degree-of-freedom position and orientation in real-world space. An overview of how an AR "session" proceeds in this context may be found at https://developer.apple.com/documentation/arkit/arsession "ARSession", and https://developer.apple.com/documentation/arkit/managing_session_lifecycle_and_tr acking_quality "Managing Session Lifecycle and Tracking Quality", among other resources.

Although known AR-based applications may provide useful qualitative information about objects in the field of view of a camera, such as identifying flat surfaces and where they intersect, they provide little or no quantitative information with the precision required in many cases, and do not enable remote measurement of arbitrary segments within an image.

Moreover, existing systems do not enable convenient determination of the 3D structure of environments using readily available devices such as smart phones, especially not in a manner that allows for easy transmission and remote analysis.

### BRIEF DESCRIPTION OF THE DRAWINGS

Figures 1 and 2 illustrate how a mobile device is used to select reference points of a surface.

Figure 3 illustrates how a surface can be indicated in a display of the mobile device, along with optional linear measurement.

Figure 4 illustrates selection of yet another reference point of a surface and how this can be used to define an initial plane.

Figure 5 illustrates how features within a selected surface can be identified.

Figure 6 shows an example of a three-dimensional rendering of a space captured surface-by-surface, as well as identified features in the surfaces.

Figure 7 shows an example of how the dimensions in space, after planar capture and processing, can be estimated and presented to a user.

Figure 8 illustrates an embodiment in which reference points may be derived for surfaces even when the actual points are obscured from the view of the mobile device.

Figures 9A and 9B illustrate a method for measuring the distance to a point without the need for augmented reality mechanisms.

Figure 10 illustrates the main hardware and software components in a user device and recipient device, which may in some embodiments be separate, but may, in other embodiments, be combined.

## DESCRIPTION OF THE INVENTION

Two classes of embodiments are described here: A "basic measurement" embodiment and a "planar determination" embodiment, which builds on some of the mechanisms used in the basic measurement embodiment. The basic measurement embodiment enables a user (the party imaging an environment) and/or recipient to remotely measure geometric characteristics of the environment (also referred to as a "scene") such as distances between points, areas, volumes, etc., in a representation of an image that is transmitted from an imaging location by a sender. The planar determination embodiment enables a user to generate an accurate and transmittable 3D virtual model of a space. By way of example only, the description below will refer to a use case in which a homeowner (the image "sender" or "capturer"), using a mobile phone, takes images of an area of a scene such as a room that has sustained damage, and who is submitting a claim to an insurance adjuster (the image "recipient" or "evaluator") who then needs to estimate the extent of damage.

In some embodiments, the AR mechanisms present within the mobile device are leveraged to help in determining the presence of planar surfaces and features. Adaptation of the corresponding example, if needed at all, will be within the skill of programmers who understand modern AR technology. Adaptations may involve different phones, AR technology other than ARKit, different mobile phone operating systems than iOS, imaging environments, etc. An embodiment that employs a method for measuring distance that does not rely on AR mechanisms at all is also described.

Although a user may send as many photos of a region of interest as desired to a recipient, including coordinate metadata, and may need more than one to create 3D models or measure geometric characteristics that cannot be captured in a single image, one advantage of embodiments of the invention is that it will in many cases be possible to measure distances and in some cases even areas from a single captured and transferred image.

A few examples of the large number of other use cases include:

• a freight consolidator may want to estimate the dimensions and volume of a proposed consignment

• constructing a virtual 3D model of facilities for remote inspection and maintenance, such that users can do a "walkthrough" using the complete 3D model, while simultaneously taking measurements of various parts remotely, for example, for the sake of repair or replacement

• building virtual 3D models - to accurate scale -- of various facilities for the purposes of training, mission planning, scenario planning for emergency response (such as in a hazardous environment), and remote visit/walkthroughs, again with measurement of features included in the scene

• a homeowner, using her mobile phone, can construct and transmit a geometric representation of a room to an insurance adjuster, who may then determine the size of an area of damage, or to a real estate agent who wants to get estimates of the sizes of various features in a house

Different implementations may need either or both of the main embodiments, that is, the basic measurement embodiment and/or the planar determination embodiment. For example, an insurance adjuster might need to measure only an area of damage on a floor, whereas a freight consolidator will generally need to determine a volume.

One embodiment uses "SceneKit" along with ARKit to measure distances within a photo of the scene that the capturer takes. SceneKit is a known three-dimensional graphics-rendering API (application programming interface) for Apple, Inc., platforms. Similar APIs, software developer kits (SDKs), or other interface applications are available for the AR routines of other manufacturers such as those that run the Android OS and can be adapted using known techniques by skilled programmers to carry out the procedures described below.

ARKit is built on top of SceneKit, but uses real-world images as a background and renders 3D content on top of it. The main task is to match the real-world image and 3D representation, so as to create an illusion that a 3D object is placed in the real world. To do that, embodiments use the functions included in ARKit (or AR Core on Android) that provide data from motion sensors (accelerometer and gyroscope) that typically can sense with six degrees of freedom, as well as an image from the onboard camera, to calculate movements of the device and the relative position of imaged, detected planes (surfaces). Using this data, embodiments may leverage ARKit (or AR Core for Android, or other equivalent existing mobile device technology) to move virtual cameras, similar to the movements of real cameras of the device, so that the real and rendered worlds coincide.

When activated, embodiments use ARKit (for example) to determine several (often hundreds or even thousands) feature points from the 3D scene captured at at least two positions of the camera, using its visual-inertial odometry. As long as the user is moving the camera, it is usually not necessary for him to deliberately "take" these two pictures (images), but rather ARKit may be called to simply capture different 3D scenes from different video frames in real time. Coordinate information is stored as image metadata for each feature point, or is at least made available for extraction and storage by calling routines. From the feature points' coordinates, known mathematical methods and image-processing and feature-recognition techniques are used to determine the presence of characteristics such as surfaces with pre-determined geometries, such as planar walls, floors, windows, etc., which may be polygonal, round, elliptical, or any other pre-defined shape. A 3D graphical model of these derived features may then be computed and overlaid on or associated with the view of the real world-space as viewed in the device's camera.

To use embodiments of the invention, an application, referred to here as DF Measure, is installed in the mobile device of the homeowner (or other sender/capturer). Alternatively, the homeowner may be directed to install an application associated with the recipient, such as the insurance company, which executes the DF Measure program in the background. This recipient application may be used to prompt and guide the user through the image capture process, and may itself launch DF Measure to start an AR session. Alternatively, the recipient application may itself be or include the DF Measure software module.

The mobile device may be of any type that is able to capture images, run DF Measure, and communicate over a network with a device on the recipient side. For purposes of this example, assume that the homeowner's mobile device is an iPhone, in which ARKit and SceneKit are installed. As with other computing devices, the mobile device will include a processor, a volatile and/or non-volatile storage system, system software such as an operating system, and a mechanism for communicating over a network. DF Measure comprises code that is embodied as executable code in the storage system and runs on the hardware and software platform.

Image Capture

When the homeowner wishes to transmit information to the evaluator, either on his own or at the prompting of the evaluator, he (or the recipient application) launches DF Measure, which in turn may activate ARKit and SceneKit to start an AR session with horizontal and vertical surface detection, for example, using an ARKit ARWorldTrackingConfiguration call.

BASIC MEASUREMENT EMBODIMENT

In some implementations, what is needed is for the user to generate specific measurements of various linear distances or lengths of features in the imaging environment. In these cases, the basic measurement embodiment of the invention is advantageous. After a description of this embodiment, the "planar determination" embodiment is described, which, as will be seen, uses many of the same features as the basic measurement embodiment.

DF Measure (or the recipient application) may then direct the user (in this case, the homeowner), during the ARKit session, to scan, that is, continuously image, the environment until the desired surface (for example, the one damaged) is recognized. Such direction may include instructions as to in which direction and for approximately how far and/or fast the homeowner should move and tilt her mobile phone. Any known method may be used to provide such directions, such as progress bars used when taking panoramic photos, or other known graphical devices. While the user is scanning the environment, she may be presented with a filled-in polygon (which may have a customizable color to aid visualization), which indicates the surface that has been recognized by ARKit so far; this is commonly referred to as a "mesh". Using ARKit, the user is also able to see a colored outline that wraps a known mesh; this rectangle is generally referred to as an "extent". Again, to aid visualization, different colors or patterns may be used to represent surfaces with different orientations, for example, green for horizontal surfaces, yellow for vertical surfaces, and something else for other types of surfaces that are neither horizontal nor vertical.

When the user sees on his device's screen that the surface that needs to be measured is represented, he/she uses normal camera controls to capture the image, that is, take a photo of it. This may be called the "basis photo". This may be done either at the user's discretion, or by being prompted, for example, by the remote insurance adjuster. The application, either DF Measure or the recipient application, then saves the current frame (which becomes the basis photo) from the video scan feed of the camera as well as its corresponding 3D representation, with all detected surfaces and with the real-world scale (using any preferred metrics system) in 3D space during the ARKit session. It may then store this information in any folder or other data structure in the phone, accessible to DF Measure or the recipient application, or the information can be automatically transmitted to a cloud storage system, so that the basis photo, along with its metadata, is easily accessible by other users who need to take measurements on the basis photo.

In different embodiments of the invention, the homeowner may operate either independently, that is, without direct communication with the recipient, or under the supervision, direction, and prompting of the recipient. For example, the user may know just what image contains the area of interest, that is, the area to be measured, and may operate only with prompts from DF Measure. In other cases, the recipient (insurance adjuster, freight consolidator, etc.) may wish to direct the image capture procedure - the insurance adjuster may for example wish to control which parts of a room are imaged. In such cases, the images being generated by the user's device's camera system could be streamed in real time to the recipient, who then directly guides the homeowner, either via a voice call, or by sending signals such as prompts from the recipient's computer system. In one embodiment, the recipient herself, viewing the live video stream, could direct DF Measure in the sender's phone to take the desired photo(s).

Feature of interest

DF Measure preferably presents different views to the user, that is, the person capturing the images to be processed. First, the user may open the basis photo, along with its metadata, so that it displays on the user's mobile phone, laptop, desktop, or other device via the DF Measure app or any known browser such as Chrome, Internet Explorer, Safari, etc.; this may be referred to as the "Measuring screen". In one prototype, the Measuring screen had three main viewable layers, referred to here as (in this example of the capturing device being an iPhone) the UIImageView, the SCNView, and the DrawingView:

UIImageView is an Apple, Inc.-provided object that displays either a single image or a sequence of animated images in a designated interface. This image may be the mobile device's normal presentation of the basis photo, which may be in any predetermined format such as .jpg, and is visible to the user;

SCNView (an Apple Inc.-provided routine for displaying 3D SceneKit content) is called to constructed 3D scene, which may be presented either automatically, overlaid on the basis photo or, preferably, only upon user selection, such as when the user touches the screen; and DrawingView is a custom view to draw the dots and line visible to the user, as described further below.

Layer 1 (UIImageView) indicates to the user where to place the measuring points (dots) within the frame of the basis photo, except in embodiments in which point selection is done later by the recipient. ARKit and similar utilities (like AR Core) will typically determine a large number of feature points, but it is not required by the invention that the user must or needs to select any of these points to define a "measurement segment", that is, two endpoints and the line connecting them.

Layer 2 (SCNView) is used to perform inter-point-pair distance measurements. Based on the location of the measuring points (dots) on the screen the "hitTest" routine may be called to define the location of those points projected on the surface in 3D space. hitTest(_:options:) is a known (see, for example, https://developer.apple.com/documentation/scenekit/scnscenerenderer/1522929-hittest) routine that searches a scene for objects corresponding to a point in the rendered image. The distance between selected points in the image, preferably including the 3D overlay, may then be computed.

For each feature point generated by ARKit, recall that its metadata will include 3D coordinate data. Based on the location of the measuring points, DF Measure may therefore compute distances between points using known methods. Examples of methods for determining these distances are described below.

Layer 3 (DrawingView) is a custom view and overlay generated by DF Measure to present the selected measurement segments in any way that is easy for the user to view; for example, white dots for endpoints and a white line could be generated on top of the reference object. This feature is preferably not part of the Layer 2 (SCNView) so as to ensure the same scale on the screen no matter how far it is; otherwise, because of perspective, lines farther away might be hard to see on the screen. Rather than fixed colors for measurement segments, it would also be possible for DrawingView to adapt the colors so as to choose a color with the greatest degree of contrast with the surrounding pixels; this may prevent white lines being drawn on white backgrounds, etc.

The user may determine a feature of interest by choosing points and segments that enclose it, for example as a polygon. The second end point of one segment may, for example, be the first end point of a connected segment, and so on, until the feature of interest is identified. For polygonal shapes, in particular of rectangular, planar surfaces such as walls, floors, windows, etc., ARKit may itself identify them and, for example, present them in a distinguishing color.

The user may in such cases simply select that presentation, which then automatically determines which feature points may be used to define it. In other cases, however, such as an irregularly shaped area of damage to a wall or floor, the user may instead choose segments that enclose the area of damage or other area of interest that the user intends to measure on the captured photo.

In other embodiments, the user himself does not select the feature of interest (such as an area of floor damage), but rather the recipient does, after receiving an image that includes the feature. Feature selection may be automatic (such as being chosen from a pre-stored set of common geometric shapes such as rectangles for windows and doors), or using other known input techniques. For example, while viewing an image of a portion of a room, a recipient, such as an insurance adjuster or contractor, could move a cursor to either select points or create a curve that encloses an area of damage visible on the floor.

It would also be possible to present the user (whoever is defining the measurement feature or area) with other geometric shapes to be used to delimit a feature for later measurement. For example, the user might choose a "circle" icon, tap the screen where its center should be, and then drag the displayed circumference to a desired radius. The metadata for the selected area could then be stored as the coordinate of the center point and the radius. Ellipses and other shapes, as well as closed free-form curves, may be presented and controlled similarly.

In some embodiments, it is not necessary for the sender to choose points to delimit a feature or area of interest. Rather, using points and features defined by ARKit, the sending user may, or may be directed, to choose points that are well-defined in the image, for example, those that ARKit uses as corners of planar features.

Transmission to recipient

An evaluation application is preferably installed in a computer controlled by the recipient, to receive and process files and information sent by the recipient. In some embodiments, all processing may be done within the recipient's computer. In other embodiments, some or all of the processing may be done using remote, cloud computing, with results being sent to the sender's computer.

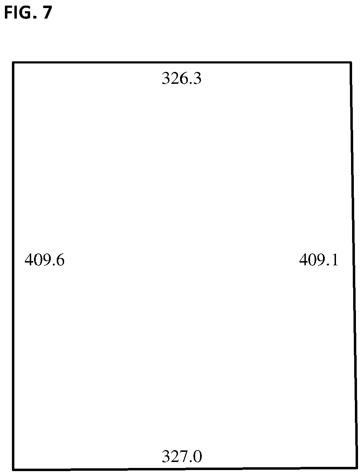

In some embodiments, the procedures relating to Layer 2 and Layer 3 are carried out by the sender at the time of photo capture. In this case, after the basis photo has been captured, it may be transmitted to the recipient, along with the photo's metadata, possibly the floorplan (Figure 7) as well as the 3D image overlay representing the AR-derived geometry of the scene and the representation of selected points defining measurement segments.

In other embodiments, the steps of Layer 2 and Layer 3 may instead be carried out by the recipient, or via remote processing. In these cases, the sender transmits to the recipient the basis photo along with its metadata, which will include the ARKit-generated feature point coordinates. If either or both of Layer 2 and Layer 3 were not already done by the sender, the recipient should then perform the procedures described above. In such case, the application in the sender's computer will display the "raw" basis photo, the 3D overlay, and input the sender's selection of points for measurement segments. One advantage of having at least Layer 2 carried out on the sender's side is the ability then for ARKit and ARScene to generate the overlaid 3D representation. If these steps are to be performed by the sender's computer, however, then corresponding known software modules will be included to create the same effects. One advantage of having the recipient choose the measurement points and segments is that there then will be no need for coordination with the sender, since the recipient will be able to select the points and boundaries of interest directly.

Distance measurement

Once the photo and associated metadata are submitted to the recipient, which may in turn submit the coordinate data to a separate, possibly remote, processing system, the distances of the various measurement segments may be computed.

In some cases, segments of interest are points whose coordinates are contained in the received metadata. In such case, the well-known Euclidean distance may be computed. As is well known, for two points (x1, y1, z1) and (x2, y2, z2) in three-dimensional space, this distance $\delta$ may be computed as

$$\delta = \sqrt{(x2 - x1)^2 + (y2 - y1)^2 + (z2 - z1)^2}$$

In other cases, however, the image capturer, or the recipient, may wish to measure the distance of two points that are *not* endpoints of a feature segment that ARKit has identified. Different methods may be applied to estimate the distance even of such a non-rendered line segment.

To estimate the distance of such a line segment, some scale must be available - a line segment that, on the screen, appears to be 1 cm long may correspond to a physical distance both greater and less, depending on how "deep" into the image frame it is located. In other words, actual distance is affected by perspective.

In one embodiment, the distance of a "freestanding" line segment, that is, one now already defined and measured, is measured using the scale defined by the closest point pair (line segment) for which a measurement has already been computed, for example, a point pair defining two endpoints of an edge of a wall or tabletop. For example, if the vertical edge of a door frame has been computed to be 200 cm, and a user selects two nearby points whose connecting line segment appears to be 60% of that length, then the system may provide a distance estimate of 120 cm.

Another method may be to assign a "scale" (physical distance : apparent distance) to a point, such as the midpoint, of more than one already measured line segment closest to the line segment of interest, determine the mid-point of the line segment of interest, and then apply a scale that is the average of the nearby, known scales, weighted by their distance from the mid-point of interest.

As a generalization, each already measured line segment may be considered to be a vector, with a direction and a length, having an origin in either of its endpoints, of its computed mid-point. As such, they may be considered to be elements in a vector field that fills the 3D space of the rendered basis photo (and overlaid 3D model). The length of a freestanding line segment of interest may then be estimated by interpolating over the vector field. Note that extrapolation may instead be used to estimate the length of line segments that are located outside the already measured region of the basis image.

Moving subject

In the example above, it is assumed that the homeowner/capturer/sender is using his mobile phone to capture an image of a stationary space such as a room. This then allows the use of such technologies as "visual-inertial odometry", which depend on motion of the mobile device. The techniques of the invention described above may be adapted to the "reverse" situation if other technologies are used where there is relative motion between an object and the camera. One such technology uses time-of-flight (ToF) pulses of energy of some wavelength, such as infrared or laser (so-called "LIDAR") that can determine distance even if the imaging device itself does not move. As yet another example, using cameras with an optically or electronically adjustable aperture and focus, and thus computable depth of focal point, distance to a subject may be estimated by adjusting the focus until maximum edge sharpness is detected. Such alternative techniques would then make it possible for a stationary device to image an object that moves into its frame of view, determine feature points, and thus enable creation of a 3D model that can be processed otherwise as described above.

Direct feature point placement

In the description of embodiments of the invention above, the user is presented with a 3D representation of the underlying scene. For example, the user may be enabled to "click" or toggle between seeing only the photo of the scene, or seeing the scene with the 3D overlay, or seeing only the 3D representation. Generation of the 3D representation is part of the normal functioning of routines such as ARKit, and presenting it to the user has the advantage of enabling the user to see that the 3D rendering is correct. The invention is not restricted to such a feature, however. Instead, as long as feature points are generated from which to establish distance scales, it would be possible to do without the 3D representation (whether the rendering program generates it internally or not) and instead to direct the user (sender or recipient) to select measurement points, and to delimit measurement areas of interest, directly on the captured scene, that is the "photo".

PLANAR DETERMINATION EMBODIMENT

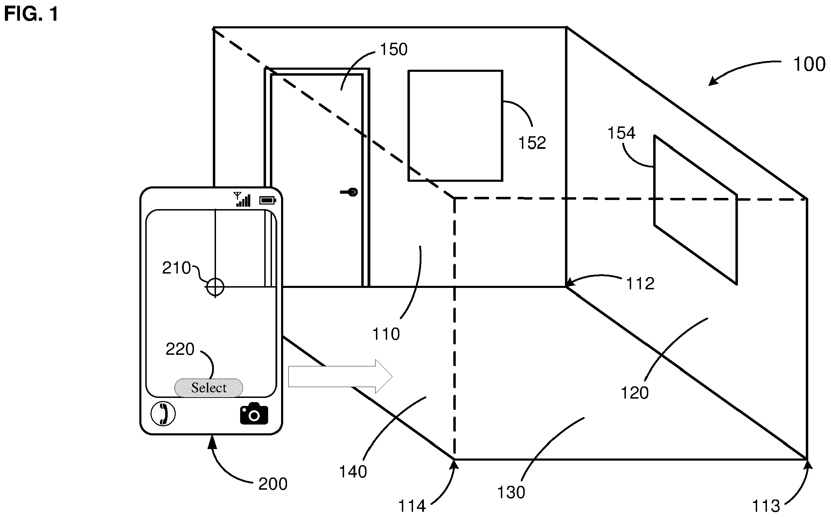

Figures 1-9 illustrate different procedures and aspects (some optional) of a planar determination/measurement embodiment. In general, the 3D environment illustrated in these figures may be the same as for the basic measurement embodiment. Moreover, this embodiment also uses the ability of existing AR routines in smart devices to identify points and surfaces and associate these with distances. These figures illustrate what a user might see by viewing the environment 100 (shown as a room) on the screen of his mobile device 200, such as a smart phone, via its built-in camera. The user will then naturally be standing in the environment, but the figures show the smart phone as appearing somewhat "outside" it only to make clearer what's being marked and measured in the environment.

Just by way of example, the environment illustrated in Figures 1-9 is a room 100 that has four substantially vertical, flat walls 110, 120, 130, 140, four lower corners 111, 112, 113, and 114, four upper corners 115, 116, 117, and 118, where the walls and ceiling (not show) intersect, a door 150 and two windows 152, 154. The figures illustrate different steps as well.

Main structure capture

See Figure 1. To start the process of generating a virtualization of the environment, after launching the DF Measure application, and after ARKit (for example) has initialized, the user indicates in any known manner, such as by tapping on an icon (not shown) that he wishes to create a 3D virtualization of the environment. In other words, the user indicates that he wishes to run the planar measurement embodiment instead of the basic measurement routine.

Possibly following a prompt generated by the DF Measure application or by an intended recipient (such as an insurance adjuster, who may communicate with the user in real time using any known application), the user places a displayed marker 210 over a first distinguishing point (Figure 1), preferably the point of intersection of at least two lines, such as a line defined along the intersection of a wall and the floor, along the intersection of two walls, the intersection of a wall and the ceiling, etc., and then selects this point using any standard method, such as tapping on a "select" icon 220. Rather than having a dedicated "select" icon, it would also be possible to use the existing feature of smart devices and simply tap on the marker 210, activate a physical button, or any other method, to indicate point selection.

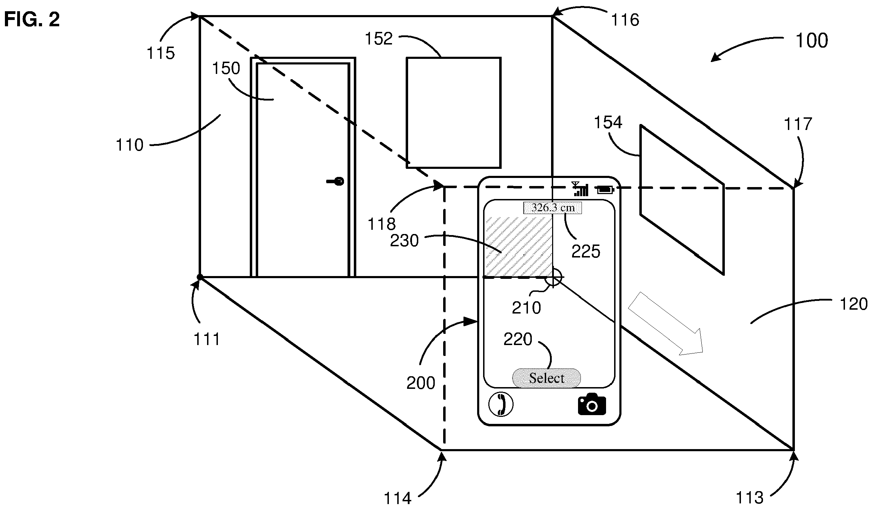

Figure 2: The user then aims the marker 210 at a second distinguishing point (112), moving himself and/or reorienting the device 200 as needed, and selects it. As the user moves the device from the first (111) to the second (112) distinguishing point, the image of the detected surface (here, the wall 110) is preferably at least partially overlaid, such as with shading 230, coloring, etc. This identification of surfaces will typically be built into the AR utility itself. Note that the floor surface may also be so identified, preferably using some different shading or coloring or other overlay. Note that, at this point, the DR Measure application may not know the vertical extent of the wall, which may not be in the field of view of the device camera. The partial overlay of the wall image, however, will indicate to the user at least that a surface has been detected. Using the distance-measuring capability of the basic measurement embodiment, the linear distance may optionally be displayed for the user as he moves the device from point to point. In Figure 2, a distance of 326.3 cm is, for example, illustrated in a display field 225.

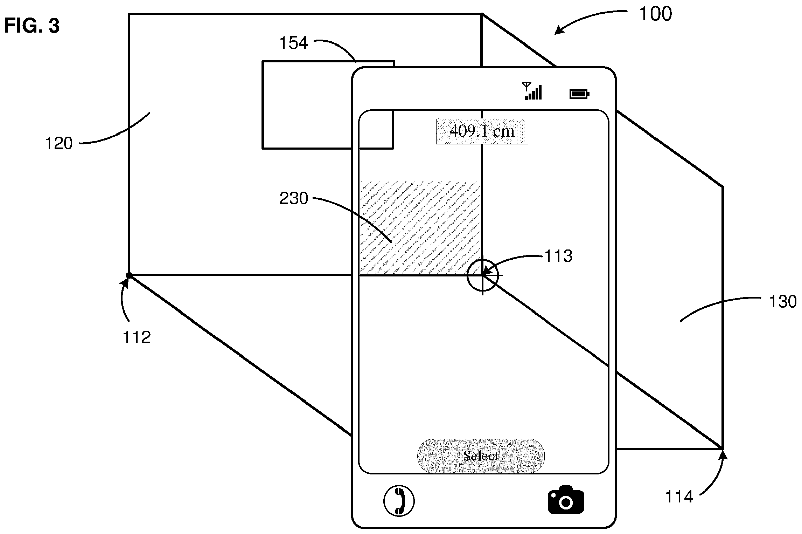

Figure 3: The user may then continue to image the environment, moving the device so as to be able to select a third point 113. Although not shown, the user may repeat this process of identifying and selecting distinguishing points that define the corners of a surface in the environment. Note that points 111, 112, 113, and 114 define the corners of the mainly rectangular floor, as well as the points from which edges of wall intersections extend.

Although the environment illustrated in the figures appears as a rectangular room, this is not a limitation but simply an example: any number of points defining intersections for environments with an essentially arbitrary geometry may be used in DR Measure, although the best results will generally be obtained for environments in which edges are straight. The environments also need not be convex, and there may be walls or partitions that extend into a space, which may be imaged, measured, and modelled like other planar surfaces.

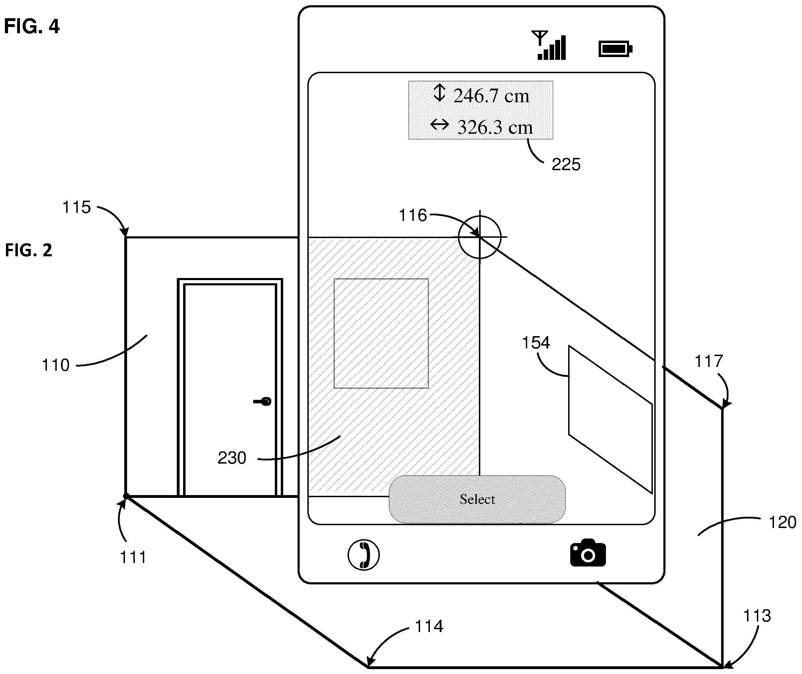

Figure 4. The user then aims the device until the marker is over some point on an upper edge line of a wall of interest. In Figure 4 this is the corner point 116, but, in the case that the ceiling is parallel to the floor, it could also be on any point on the line connecting points 115 and 116 (the "115-116 line"). The shading/coloring 230 in the image preferably is displayed so as to be "stretched" upward to match the vertical position of the marker as the user pans the image upwards. Under the assumption that the wall 110 is rectangular, with vertical wall intersections, choosing any point on the 115-116 line, along with the lower corner points 111 and 112, will define a rectangle corresponding to wall 110; the features of ARKit (or equivalent) will then also have determined the coordinates of the defining points. It would of course also be possible to image up to down instead, that is, identifying upper corner points and a lower edge point.

If it is assumed that walls are rectangular, it will not be mathematically necessary to mark both lower corner points 111, 112 and then an upper point; rather defining two diagonally opposing points, such as 111 and 116, will generally suffice. Some underlying AR utilities, however, may require the identification of straight-line features as a starting point and in such case the implementation of DF Measure should follow that convention.

Using the same techniques as for measuring horizontal distance, DF Measure application may measure the vertical distance from point 112 to 116 also, and, if the display field 225 is generated at all (it is optional), optionally display this as well in the field 225.

Using the same procedure as above, the user may proceed to define upper line boundaries of other walls. In many common environments, however, this may not be necessary. For example, if the ceiling is known to be parallel to the floor, then selecting a single vertical point will be enough to determine the vertical extent of all the walls in the environment.

Feature identification

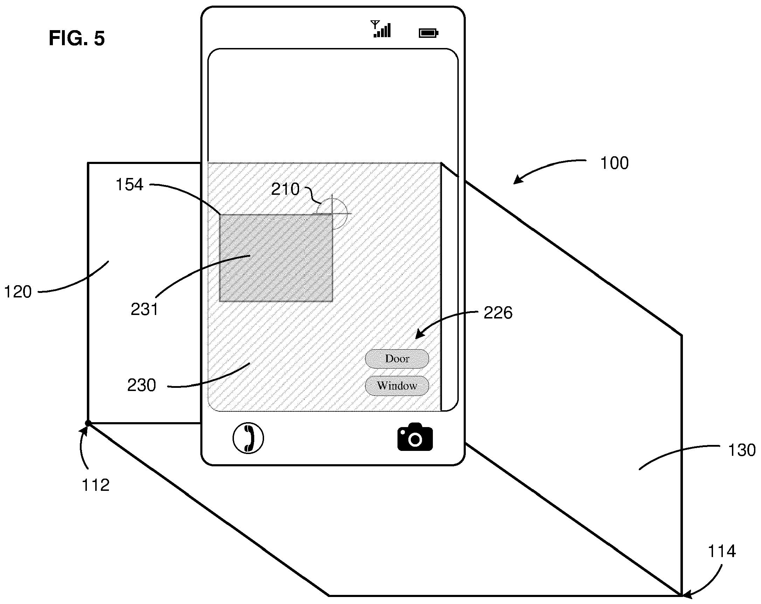

See Figure 5. Walls in common environments are usually not featureless planes. Rather, in environments such as homes, buildings, etc., there will also be features such as doors and windows. DF Measure preferably therefore gives the user the option and ability to identify such features as well. As one example, as illustrated in Figure 5, the user may indicate, for example via selecting from an appropriate set of icons 226, that he wishes to identify a window, such as window 154 in wall 120. The procedure for delineating a window may be essentially the same as for identifying a wall: The user maneuvers the imaging device such that the marker is over one corner point, and then the diagonally opposite point (or lower edge corners and top point, or upper edge corner and lower edge point).

The area defined as the rectangle having the initial point as one corner and the current position of the marker as the other is preferably highlighted with shading or coloring 231, until the user selects the other diagonal corner point of the feature. Such "expanding highlighting" is common in many applications and is therefore within the skill of programmers who work with graphical user interfaces. The shading/coloring for the feature is preferably different from the shading/coloring used for the wall 120.

Many AR utilities within smart devices are able to identify certain geometric shapes automatically, for example, by applying edge-detection algorithms to the pixel maps of images. Such routines may in some embodiments be sufficiently accurate to identify features such as windows and doors in rooms, without the need for the user to mark corner points. DR Measure may in such case detect and import the coordinates of such automatically identified structures; the user may then be presented the opportunity to confirm and label them (such as "door" or "window") for further use in modelling (see below). Such manual confirmation (for example, by tapping an icon) may help prevent, for example, framed paintings hanging on a wall being mistaken for a window.

3D Virtual model construction

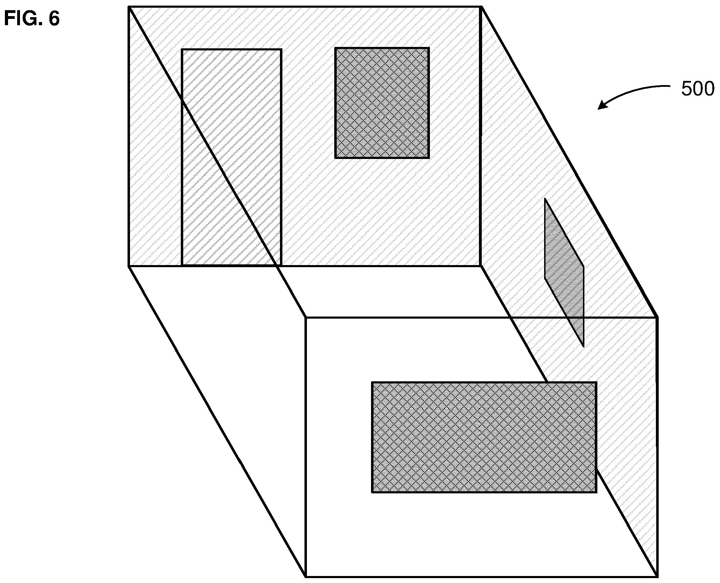

Figure 6: Each point selection defines coordinates, and, using known computations, the DF Measure application may then is desired construct a virtual 3D model 500 of the imaged environment, which may be displayed on the user's device. In other implementations, a full 3D model may not be necessary. For example, an insurance adjuster may need to determine only the area of a portion of a floor or wall, in which case the basic embodiment described above may suffice. Figure 6 illustrates a simple example of such a model. Using known mathematical operations, the user may also rotate the displayed model so as to "look" from different perspectives. In this example, features such as doors and windows have different shading/coloring than wall and floor surfaces, and different feature types preferably have different shading/coloring as well. The type of shading/coloring used for different features and surfaces may be made user-selectable. The coordinates defining the corners of surfaces in the 3D model may also then be transmitted to a recipient for remote reconstruction, for viewing and analysis. The model 500 may be transmitted using either raster or vector representations.

2D plan generation

The dimensions of the "floorplan" of the environment may also be generated and displayed. As Figure 7 illustrates, it is unlikely that existing AR technology found in currently available smart devices such as mobile phones is precise enough to yield a rectangle (or other form) whose dimensions match "perfectly". Tests of a prototype of DR Measure have, however, displayed an accuracy of better than 95%, and usually around 98%, over the dimensions found in normal residential spaces. This will in almost all cases be satisfactory for use cases such as the evaluation of the approximate area of damage in a home, for "virtual" tours of homes, for estimating the dimensions of storage spaces, etc.

As a post-capture process, DF Measure may "rectify" the 2D image, and thus also the 3D model. For example, if the lengths of opposite edges of the environment are within a certain percentage of each other, then it may reasonably be assumed that they are in reality of equal length. As an example, the 2D "floorplan" of Figure 7 has dimensions that very closely conform to a rectangle, and, given the nature of the environment, rectangularity is a reasonable assumption. The DR Measure application may in such cases adjust the estimated lengths so as to be equal, for example, by assigning to each opposing edge a length equal to the average of the two.

Any deviation from perpendicularity of edges that are very close to being perpendicular may similarly be corrected for. One way to test for likely perpendicularity would be to represent edges as vectors; if the absolute value of the dot product of meeting edges is less than some threshold, then the system may also assume that the edges are in reality perpendicular.

Obscured points

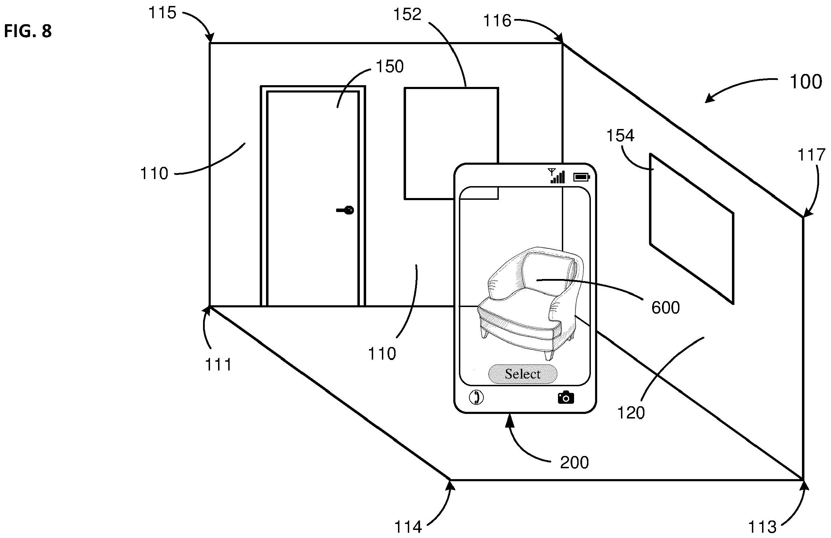

Figure 8 illustrates a common situation: Some item obscures one of the points the user wishes to image and mark. In Figure 8, this is illustrated as being a chair 600, but it could of course be any other item that does not obscure the entire line on which the point of interest (here, corner point 112) lies. This embodiment of the DR Measure method may in such cases infer a distinguishing point as soon as it has accumulated from the AR utility coordinates of enough points (theoretically, only two needed per line) for at least two lines that are assumed to intersect in the distinguishing point, such as points on the line 111-112 and points on the line 112-113, or either of these lines and the vertical edge line 112-116, or all three of these. Given at least two points on each line, the parameters of each respective line may be computed.

Since neither measurement precision nor accuracy is perfect, solving for a single point of intersection of the computed lines will typically not yield a result. On the other hand, DR Measure may use known mathematical methods to compute the nearest-point solution for the partially imaged lines, and assign that as a computed, inferred distinguishing point. If the closest approach distance of the lines (from which the nearest-point solution is normally derived) is greater than a predetermined threshold, then the user may be notified and asked to take corrective action, such as moving the obstacle out of the way, or the DR Measure application may accept the solution and add an indication to or along with the final 3D model that the displayed point is uncertain. The process of "rectification" mentioned above may also be used to better locate the obscured point: If three corners of a rectangular room are established, then the obscured point may be easily computed.

Note that, using this procedure, DR Measure may not be able to determine this inferred distinguishing point until the user begins to image a second line and to then "complete" the partially obscured first line, but since it will be able to do this as soon as a second, intersecting line is acquired, this will typically not be an inconvenience to the user.

Non-orthogonal geometry

In the examples and illustrations in Figures 1-8, the planar surfaces of the environment are either parallel or perpendicular to each other. This is not necessary. The edges of the floor might, for example, define a polygon with more than four sides (or with only three). If the walls are all perpendicular to the floor and rectangular, such that the ceiling has the same polygonal shape as the floor, then the techniques described above for a rectangular floor and ceiling may be used essentially without change - the user will simply image and define more edges and the DF Measure application may generate a 3D virtual model in the same manner.

The DF Measure application may be configured to generate 3D virtual models of even more complicated geometries. As one example, assume still that vertical walls are rectangular, but that the plane of the ceiling is not parallel to the plane of the floor. In other words, the ceiling may be higher at one side than the other. Rectangular walls may then be imaged and measured as with others, described above. At least two other walls, however, would be quadrilateral, but not rectangular: the ceiling edge will be "angled", that is, not perpendicular to the vertical wall edges. The DR measure application may handle this geometry as well.

As one example, the user could indicate, for example by tapping on a "polygon" icon or the like, that the surface he is about to image is not rectangular. In some embodiments he might also be prompted to enter a number of corners. The user may then image and select the corners of the non-rectangular wall in a specified order, such as clockwise or anti-clockwise. The DR Measure application may then store the coordinates of the corners as usual, and model the wall by connecting adjacent points with lines. The main difference in this case as compared with the case shown in Figures 3 and 4 is that shading/coloring of the selected surface may need to wait until all corners of the surface have been identified.

The DR Measure application may also be configured to enable a user to image curved surfaces as well. For example, rooms may have curved alcoves, recessed fireplaces, or rounded, protruding window constructions such as bay windows, oriel windows, etc. In short, in some environments, vertical walls may be curved. One way to image such walls is for the user to select several points along the bottom (or top) edge of such a wall, in effect representing the curved wall as a series of adjoined rectangles, which may then be imaged, measured, and modelled as other rectangular walls. It would in such case be possible to consider this wall as another kind of feature, such as a window or door, with a "multi-point" icon for the user to select before proceeding. As another option, possibly after selection of a "curved" icon by the user, the DR Measure application could compute a smooth approximating arc through the selected points, which would avoid the final 3D virtual representation having a "choppy" appearance if the user selects only a few points on the curved edge.

Some environments may include free-standing features, that is, features that do not intersect any outer wall of the environment. Internal, spiral staircases, kitchen "islands", etc., are examples of such internal structures, some of which may not extend to the ceiling. These may be imaged, measured, and modelled using techniques described above. In order to capture not only the geometry of such disconnected structures, but also their relative location within the environment, the user may be directed to "create" a line from one or more known points such as corners to at least one corner of the structure. A tape measure, strip of tape, or any other material with sufficient contrast against the background of the floor would be detectable by ARKit. The "created" line on the floor could then form a "dummy" edge used only for measurement, and DR Measure may then use known computational methods to determine the position of an initially selected corner or point of the structure relative to the chosen reference corner(s) or other point(s).

Non-AR distance measurement

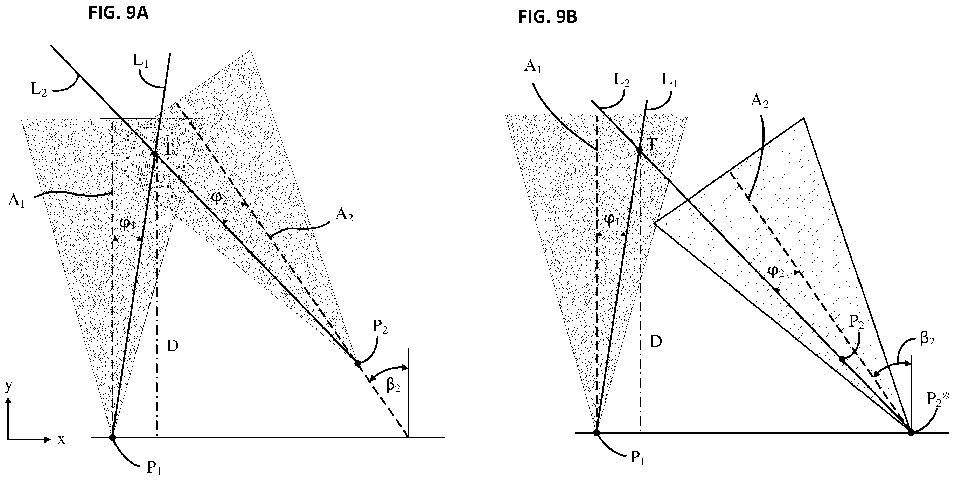

Many techniques for stereophotogrammetry and stereometry have been well-known since the advent of cameras, and the underlying principles were already known to Leonardo da Vinci in the late 1400's. To determine the distance to an object based on two images requires some form of distance reference, such as the focal length of lenses used, or constraints on how the images are taken. One embodiment, illustrated in Figures 9A and 9B, leverages technology found in modern mobile devices to enable distance measurement beyond the normal range of AR-based systems. For example, a user may wish to create a 3D model of a large interior space, such as a warehouse, or of large outdoor environments or structures.

See Figure 9A and assume that a user, at position $P_1$, points the camera of the mobile device such that its central imaging axis $A_1$ extends in a first direction (illustrated as the y-direction, perpendicular to an x-axis). The goal is to estimate the distance D in the y-direction to a target T.

After activating the DR Measure application and, for example, selecting stereometric measurement, the user may select the target T in different ways. In one embodiment, when the target T falls within the displayed image field (shown as a shaded "triangle") of the camera of the mobile device, the user may, for example, tap on the corresponding place on the display screen to select the target feature of interest. The target T will then lie on a sight line $L_1$, which is at an azimuth angle $\varphi_1$ from the imaging axis $A_1$. The angle $\varphi_1$ may be determined using known methods given the geometry of the lens of the camera.

Either on his own, or as a result of prompting by the DR Measure application, the user then moves to a second position $P_2$ and once again views and selects the same target T, which will lie on a sight line $L_2$ that makes an angle $\varphi_2$ with the imaging axis $A_2$. Note that the position $P_2$ may be offset both in the x- and y-directions relative to $P_1$. This is in contrast to traditional stereometric techniques, which require both the first and second positions $P_1$, $P_2$ to lie on the same x-axis; moreover, many such known techniques, such those based on parallax, require the imaging axes $A_1$ and $A_2$ to be parallel. In the illustrated embodiment, neither assumption is necessary.

As Figure 9A illustrates, the second imaging axis $A_2$ thus need not be parallel to the first axis $A_1$, but rather may be oriented at an angle $\beta_2$ relative to the y-axis. Note that an orientation angle $\beta_1$ (not shown) of the first axis $A_1$ also need not be parallel to the y-axis but, without loss of generality, it may be assumed to be so, that is, $\beta_1=0$; the equations shown below may be generalized to the case of $\beta_1 \neq 0$ using basic trigonometry.

One requirement is of course that the target T should be visible in the image field as seen from the second position $P_2$, such that it may be selected on the mobile device's display as before. Thus, target T is shown as lying on a sight line $L_2$, which is at an azimuth angle $\varphi_2$ relative to the axis $A_2$, such that T lies at the intersection of the lines $L_1$ and $L_2$. Note that the sight lines $L_1$ and $L_2$ as such will not need to be rendered for display but rather are shown in the figures only to enable better understanding of this distance measurement method.

Let $P_1$ be at coordinates $(x_1, y_1)$, and $P_2$ be at coordinates $(x_2, y_2)$. Without loss of generality, it may be assumed that $P_1$ is at the coordinate origin, that is, $(x_1, y_1) = (0, 0)$; if some other point is used as the origin, known techniques, in particular simple linear translation, may be used to adjust the equations below accordingly. The values $x_2$, $y_2$, and $\beta_2$ may be determined using the sensors found in the mobile device. In particular, the mobile device's built-in inertial sensors, such as accelerometers, may be initialized at $P_1$, for example, upon selection of the target T, and will then provide information sufficient to determine $x_2$, $y_2$, and $\beta_2$ from the sensed linear and rotational accelerations.

Now consider Figure 9B, in which the second image field is mathematically "shifted" so that the point $P_2$* from which the image is assumed to be viewed does lie on the x-axis, but in such a way that the sight line $L_2$ maintains the same angle $\varphi_2$ relative to the "translated" image axis $A_2$ as before, and the image axis $A_2$ itself has the same orientation $\beta_2$ relative to the y-axis as in the "actual" geometry shown in Figure 9A. Note that it is *not* necessary for the DR Measure application to actually perform the "shifting" illustrated in Figure 9B; rather, this figure is included merely to illustrate a convenient intermediate step that may make it easier to see how to derive the formula EQ1 below for the distance D.

Using simple trigonometric methods, the distance D may be estimated using the following formula:

$$ D = \frac{x_2 + y_2 \tan(\beta_2 + \varphi_2)}{\tan(\varphi_1) + \tan(\beta_2 + \varphi_2)} \qquad \text{EQ1} $$

The distance D may then be used as above as an estimate of distance to a distinguishing point, that is, the target point T. Once the distance D is computed, the spatial coordinates of the target point T may be computed using well-known formulas relative to either $P_1$ or $P_2$, or, if needed, both. Because this method does not depend on the distance-measuring capabilities of features such as ARkit, it may be used to estimate distances beyond the range of those features. Note that EQ1 (and EQ2 below) may be expressed in other terms than tangent, or may be rearranged or computed in multiple steps (such as by setting some other variable equal to $\beta_2 + \varphi_2$ before computing the tangent, or by using other equivalent formulations.

Rather than prompting the user to tap on a screen at the place where the target T appears in each image, it would be possible instead to display a marker, such as marker 210, and direct the user to place it over the desired target point T and then, for example, tap a "Select" icon. By choosing the marker to be on the image axis, the sight lines $L_1$ and $L_2$ would coincide with their respective image axes $A_1$ and $A_2$, such that the angles $\varphi_1$, and $\varphi_2$ will both be equal to 0. Assuming as before that $P_1 = (x_1, y_1) = (0, 0)$, the processing needed to determine these angles may thus then be avoided, since formula EQ1 will then simplify to the following formula EQ2:

$$D = \frac{x_2 + y_2 \tan(\beta_2)}{\tan(\beta_2)} \qquad\qquad EQ2$$

It is not necessary for imaging of the target T to lie completely in an x-y plane; even over distances beyond the range of the measurement devices and techniques in modern smart devices, there may be features and distinguishing points in an imaged environment that require taking three dimensions into consideration. For example, top and bottom corners of a tall building may be distinguishing points, or the terrain may be uneven. Formulas EQ1 and EQ2 may in such cases be adjusted using well-known geometric and trigonometric methods to take both azimuth and elevation angles into consideration. Equivalently, since the inertial sensors in modern smart devices typically sense in three independent spatial directions, the azimuth and elevation angles to the target T at position $P_2$ relative to the initial values at $P_1$ may be determined using known techniques, and a standard coordinate transformation may be applied, such that EQ1 and EQ2 may be used without further modification.

System components

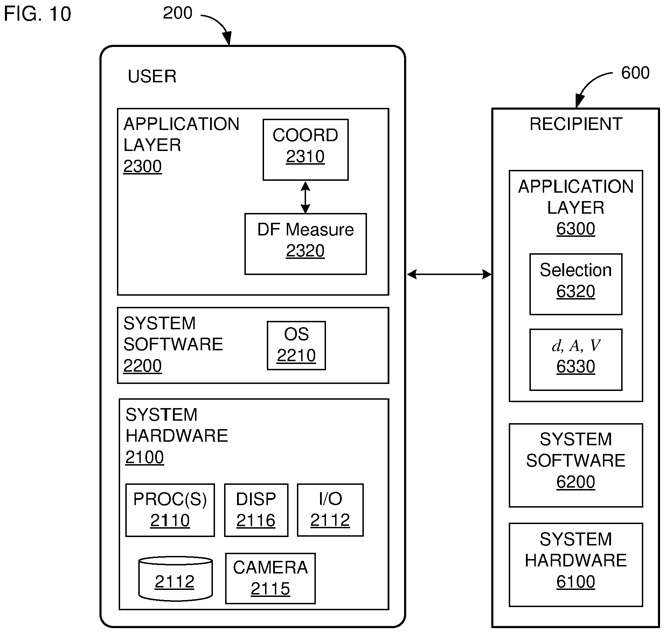

Figure 10 illustrates the main hardware and software components of a user's mobile device 200, which could be a smart phone, tablet, or even a laptop. In general each device 200 will include standard components such as system hardware 2110 with at least one processor 2110, input/output circuitry 2112 to enable the user to direct the operation of the device, as well as to communicate with other devices either wired or wirelessly, such as over a telephone network, a local or wide-area network, the Internet, etc. The I/O component 2112 will therefore typically include a network access component such as a NIC, or any known wireless communications component such as Bluetooth, RFID, NFC, etc., for communicating with external systems. The device will also include a camera 2115 and a display 2116.

System hardware 2100 also includes volatile and/or non-volatile memory and/or storage, which is indicated "collectively" as component 2112. Processor-executable code that embodies software modules such as, for example, a coordinate capture 2310 and the DF Measure application 2320 (both shown within an application layer 2300) may be stored and thus embodied in either or both types of memory/storage component(s) 2112. Especially given the proliferation of highspeed "non-volatile" storage components, the difference between these two component classes is becoming less relevant.

In some implementations, a user may have the application DF Measure 2320 pre-installed, such as where the user may be an inspector who often needs to report scene geometry to a main office for analysis. In other implementations, the user may download and install the DF Measure application after contacting an intended recipient, such as an insurance agency or contractor, who then prompts the user to download the DF Measure application using any known method, for example by providing a download link, a QR code, etc. The recipient may then also issue instructions to the user for taking the needed image(s) of the area of interest, and may pass on other information as desired such as a case or order number.

Note that the DF Measure component 2320 preferably communicates with and calls the built-in coordinate capture routine 2310, depending on how the coordinates of the scene geometry are to be captured. The coordinate capture module 2310 will depend on what mechanism(s) is/are implemented and available in the device 200. For example, in some implementations and devices, the component 2310 may be an AR routine such as ARKit. In others, it may be a LIDAR or other time-of-flight system. In still others, it may be a software module configured to input and analyze camera pixel data and to perform the non-AR distance measurement computations described above.

Figure 10 shows the device 200 including an application layer 2300, which comprises various software modules for performing the user-side functions described above. Such an application layer is usually distinguished from the system software layer 2200, which includes some form of operating system 2210, virtual machine hypervisor, or the like, in that system software operates in a privileged mode with respect to its interaction with system hardware whereas "applications" don't. In many modern devices, this distinction may not apply. Thus, that the various modules such as 2310 and 2320 are shown within the "layer" 2300 is for purpose of illustration only. It would, for example, be possible for the user device 200 to be custom-made for a particular use case, with the application-level software components being incorporated into of system software. One of the advantages of embodiments of the invention, however, is that it may be easily installed within devices such as smart phones that most users are likely to have readily available.

Figure 10 also depicts the main components of a recipient-side device 600, that is, a device that may be used to receive information from the user device to enable, for example, an insurance adjuster, to view a scene imaged by the user and, for example, select an area (such as of damage) for measurement. The recipient device 600 may be either a mobile or non-mobile computing system and will generally include typical system hardware and software 6100, 6200 with components similar to those of the user device, as needed. The recipient device may include a software component 6320 that interacts with the device's I/O and display components to enable the recipient to view the image, or a selected portion of it, and then to select an area of interest, if it has not already been delimited by the user before transmission.

A module 6330 may then receive the coordinates of the selected image portion, such as the endpoints of a line imaged by the user, or points defining a selected plane, etc., and compute the distance(s) $d$, area(s) $A$, and/or volume(s) $V$ of interest of the selected image portion using any known algorithm. The modules 6320 and 6330 may be implemented as a single body of executable code if preferred and, whether configured separately or together, form an analysis software module.

It is not required for the recipient to select and analyze only the points defined by coordinates transferred from the DF Measure component. Rather, such coordinates may be used to define a scale, such that the recipient may choose other points in the image received from the user, which the module 6330 then uses for calculation. For example, assume that an area of the floor of the user has been damaged. The user may then image, for example, all or portion of a nearby wall and transfer that image to the recipient, along with the coordinates of the plane defining the wall. The recipient, using any common technique, may then select other points in the image, such as those defining a curve that encloses the visible area of damage. The dimensions of the enclosed curve may be determined given the coordinate system defined by the parameters of the nearby imaged wall.

In some implementations, either or both of the software modules 6320, 6330 are not installed within the recipient's device 600 itself, but rather are stored and run remotely, such as in a cloud computing environment, which the recipient may access in any known manner. In such cases, the recipient may upload to the cloud service the imagine file(s) and metadata received from the user and may perform the steps of point/region selection while online, whereupon the remote service may perform any requested $d$, $A$, and/or $V$ computations and return the results to the recipient.

Figure 10 shows the user and recipient as separate entities, operating separating devices. This will be an advantageous arrangement in many use cases, for example, to enable remote inspection and measurement. In some other situations, however, the functions performed by the two devices could be carried out in a single device, for example, for on-site inspection. An inspector might, for example, capture the imaging information on-site and then either select points for measurement later, or perhaps to download them to a different system, such as a work computer, for more convenient analysis later.

## Claims

1. A method for measuring a geometric characteristic of a scene (100), comprising:

   imaging a portion of interest of the scene;
   activating a coordinate-generating component (2310);
   selecting at least two points of interest in the portion of interest of the scene, said coordinate-generating component generating spatial coordinates of the at least two points;
   transferring the imaged portion of interest and the spatial coordinates to an analysis module (6310, 6320); and
   determining at least one dimensional characteristic of at least one feature represented in the transferred image from the spatial coordinates.

2. The method of claim 1, further comprising, as a user selects the at least two points of interest in the portion of interest in the scene, generating on a display a representation of a progressively growing planar surface (230) having the at least two points as corner points.

3. The method of any preceding claim, further comprising:

   imaging and determining defining points of a plurality of planar surfaces in the scene; and
   generating a three-dimensional representation (500) of the scene from the plurality of planar surfaces.

4. The method of claim 3, further comprising identifying, imaging, and generating defining coordinates of a closed shape (150, 152, 154) corresponding to a feature located within at least one of the planar surfaces.

5. The method of any preceding claim, in which at least one of the points of interest is obscured within the scene, further comprising:

   estimating a location of the obscured point as a point of intersection between at least two linear features within the imaged portion of interest; and
   setting coordinates of the estimated point of intersection to be the coordinates of the obscured point.

6. The method of any preceding claim, comprising determining the at least one dimensional characteristic of the at least one feature represented from a single image.

7. The method of any preceding claim, in which the coordinate-generating component (2310) is an augmented reality component in a mobile device (200).

8. The method of any preceding claim, in which the geometric characteristic is chosen from the set: a distance of a line, an area of a closed shape, and volumes of a three-dimensional space.

9. The method of claim 1, in which the points of interest correspond to a single coincident target point (T) imaged from both a first (P1) and a second (P2) imaging position, further comprising:

determining a spatial offset between the first and second imaging positions;
for each of the first and second imaging positions, determining a first (A1) and a second (A2) imaging axis, a relative angle ($\beta$2) between the first and second imaging axes, and positional angles ($\phi$)1, $\phi$2) of the target point relative to each imaging axis; and
computing a distance value (D) and, from the distance value, spatial coordinates of the target point, in a coordinate system chosen for the scene.

10. The method of any preceding claim, in which:

the analysis module (6310, 6320) is installed in a recipient device (600) separate from a user device (200); and
said imaging of the portion of interest of the scene, said coordinate-generating component (2310), and said selecting of the selecting at least two points of interest in the portion of interest of the scene taking place in the user device.

**FIG. 1**

FIG. 2

FIG. 3

FIG. 4

FIG. 2

FIG. 5

EP 4 012 654 A2

FIG. 6

500

FIG. 7

**FIG. 8**

EP 4 012 654 A2

FIG. 9A

FIG. 9B

FIG. 10

EP 4 012 654 A2